# EUROPEAN PATENT SPECIFICATION

(11) **EP 2 116 829 B1**
(45) Date of publication and mention of the grant of the patent: **07.09.2016**
(21) Application number: 08008662.2
(22) Date of filing: 08.05.2008
(51) Int. Cl.: G01K 1/02

(54) **Temperature treatment device for active temperature treatment of a substance**
Temperaturbehandlungsvorrichtung zur aktiven Temperaturbehandlung einer Substanz
Dispositif de traitement de la température pour traitement actif de la température d'une substance

(43) Date of publication of application: 11.11.2009
(60) Divisional application: 16182417.2
(73) Proprietor: Electrolux Home Products Corporation N.V., 1130 Brussels (BE)
(72) Inventor: Reinhard-Herrscher, Fabienne, 74592 Kirchberg/Jagst (DE); Herzog, Michael, 91610 Insingen (DE); Hofmann, Arnd, 97511 Lülsfeld (OT Schallfeld) (DE); Münzberg, Gerhard, 5758 Obstalden (CH); Gummersbach, Mirko, 91541 Rothenburg o.d. Tauber (DE)
(74) Representative: Baumgartl, Gerhard Willi

(56) References cited:
- GB-A- 2 119 127
- JP-A- 56 107 139
- US-A- 4 036 995
- US-A- 4 377 733
- US-A1- 2006 254 432

## Description

The present invention relates to a temperature treatment device designed for active temperature treatment of a substance, the substance being fluid, solid or a mixture thereof.

Such a temperature treatment device is described for example in DE 10 2004 047 756 A1 and DE 10 2005 018 015 B3, respectively.

In DE 10 2004 047 756 A1 a household baking oven for baking a food product is described. The baking oven comprises a baking chamber for receiving therein the food product via a chamber opening. For measuring the inner temperature of the food product during baking a temperature sensor is provided. The temperature sensor is adapted to wirelessly communicate a signal representative of the temperature to a receiver unit for further handling the signal. The receiver unit is mounted at an inner wall of the baking chamber. However, there is the problem of overheating and damaging the receiver unit due to high temperatures in the baking chamber during baking.

A similar household baking oven for baking a food product is described in DE 10 2005 018 015 B3. Here, an antenna for wireless communication with a temperature sensor for measuring the temperature of the food product is integrated into a lightning device for illuminating the baking chamber. The lightning device is integrated in a recess of an inner wall of the baking chamber. Similarly, there is the problem of damages due to overheating during baking. Further, the comparatively small dimensions of the recess become a limiting factor for position, size and shape of the antenna. This is disadvantageous, as size and shape are closely linked to wireless communication qualities. Further, the aperture of the recess is limiting factor for wireless communication, with the consequence that wireless communication probably will be confined to a portion of the baking chamber. In this case it is not possible to freely position the sensor within the chamber and therefore it is left to the user to appropriately position the sensor in order to guarantee optimal wireless communication. This may be burdensome because many different sized food products can be placed in the baking chamber at respective different positions. Further, as the portion accessible for wireless communication is strongly dependent on the recess of the lightning device, it is not possible to freely choose the mounting position of the lightning device.

US 2006/0254432 A1 describes a cooking appliance such as a smoker or electric turkey fryer having an information exchange system that provides for local and/or remote monitoring of cooking characteristic that preferably includes food item temperature probing that is displayed externally on the cooking appliance as in a local remote cooking characteristic information conveyance. Unidirectional or bidirectional communication between respective components can be used.

It is an object of the invention to avoid the disadvantages addressed above. In particular it is an object of the invention to provide a temperature treatment device enabling effective wireless communication between a sensor unit freely placeable within a temperature treatment chamber of the temperature treatment device and a receiving or transceiving element provided for wireless communication with the sensor unit. A further object is to provide a temperature treatment device in which easy access, access-service, maintenance and cleaning of the receiving or transceiving element is possible.

This object is achieved by a temperature treatment device according to claim 1. Advantageous embodiments result from dependent claims 2 to 16.

According to the present invention, a temperature treatment device for active temperature treatment of a substance is provided. The substance may be fluid, solid or a mixture thereof. Below, and for simplification, the term "device" will be used as a short-term for "temperature treatment device" as far as nothing else is indicated.

The term "active temperature treatment" shall mean that the temperature treatment device is adapted to conduct the temperature treatment, as for example via a heating unit or a microwave generator, e. g. a magnetron. Below, the expression "temperature treatment" will be used as a synonym for "active temperature treatment", as far as nothing else is mentioned

The device according to the invention comprises a temperature treatment chamber adapted to receive therein the substance via a chamber opening. That is, the chamber has an opening allowing access to the inner volume of the chamber from outside. The chamber can be a baking chamber, also known as muffle, of a household baking oven for example. Below, and for simplification the term "chamber" will be used as a short-term for "temperature treatment chamber".

The device further comprises a door for releasing and closing the chamber opening in a first and second position, respectively. When the door is in the first position, the chamber is accessible from outside; i.e. the substance can be placed in or removed from the chamber. During
tion of the device, the door is in the second position, i.e. the chamber opening is closed. The term "door" shall be interpreted widely, particularly comprising lid-like or cover-like means for releasing and closing chamber openings.

The device further comprises at least one receiving or transceiving element enabling at least unidirectional wireless communication of signals from and/or to at least one sensor unit which is placed at or within the chamber or is freely placeable within the chamber. Accordingly it is possible to provide one or more receiving or transceiving elements, and one or more sensor units. For simplification, the following description is restricted to the respective singular terms, i.e. receiving or transceiving element and sensor unit. It shall be understood that all statements and conclusions in connection with the singular terms apply to the respective plural terms mutatis mutandis, as far as nothing else is mentioned. In particular, the statements and conclusions related to the singular terms are valid for the respective total number of receiving or transceiving elements and sensor units as well as for a selection thereof.

The term "at least unidirectional wireless communication" implies both unidirectional wireless communication of signals from the sensor unit and bidirectional wireless communication of signals to or from the sensor unit. In connection with unidirectional wireless communication and bidirectional wireless communication, the terms "receiving element" and "transceiving element" are appropriate short-term expressions for the more general term "receiving or transceiving element" comprising both options. In the case of unidirectional wireless communication the receiving element is adapted to receive signals from the sensor unit, whereas in the case of bidirectional wireless communication the transceiving element is adapted to receive and transmit signals from and to the sensor unit, respectively.

According to the invention, the receiving or transceiving element is positioned at or within the door or is at least one of integrated in the door, positioned on a surface of the door and/or positioned within a cavity or an interior of the door. The surface can be at least one of an inner surface facing the chamber in the second position of the door, an outer surface facing away from the chamber in the second position of the door and a surface facing an interspace between two walls of the door. The cavity can in particular be any free space between two outer and/or inner walls and/or panes of the door.

An advantage of the invention is that the receiving or transceiving element is easily accessible for service and maintenance purposes and the like. Further, it is very simple to retrofit conventional devices with receiving or transceiving elements. In order to retrofit a conventional device it is possible to exchange the door or to install or integrate such receiving or transceiving element with existing doors. In addition, doors of temperature treatment devices, such as baking ovens and the like, usually comprise walls or windows that are transparent to electromagnetic radiation that can be used for wireless communication. The receiving or transceiving element can be attached to the transparent sections without the need to modify constructional elements, as for example lightning devices or chamber walls. The invention is therefore universal. An advantage of doors transparent to the respective type of wireless communication is, that wireless communication will be available over the whole or nearly the whole volume of the chamber. A further point is that the door of the device generally provides enough space such that shape and size of the receiving or transceiving element can be widely varied, for example in order to optimize quality of wireless communication.

The sensor unit may be adapted, i.e. may have a function, to generate a sensor signal suitable for wireless communication and representative of at least one parameter to be monitored during temperature treatment of the substance.

The at least one parameter can be selected from the group comprising but not restricted to temperature, humidity, pressure, density, food product weight. Such parameters are generally representative of the course and status of a temperature treatment process and therefore are of special interest. In many instances the temperature is of particular interest, which can be at least one of a surface temperature of the substance, an inner temperature of the substance and a chamber temperature. The term "chamber temperature" shall mean a temperature within the chamber volume except for the substance, e.g. the temperature of air enclosed in the chamber and surrounding the substance. Similarly, the other parameters can be related to the substance and the chamber volume as well. Particularly in connection with temperature treatment of food products the temperature can be at least one of a surface temperature and core temperature of the substance. Such temperatures are suitable for automatically controlling the temperature treatment process.

The wireless communication can be conducted on the basis of electromagnetic waves having frequencies ranging from radio frequencies to Terahertz (10¹² Hz) and even Petahertz (10¹⁵ Hz) frequencies. For example radio waves, microwaves, infrared light or even visible light can be used. It is also possible to use sound waves or a combination of electromagnetic waves, different types of electromagnetic waves and sound waves. Such combinations may be advantageous for multiple-purpose devices, such as combined microwave and baking ovens. The type of wireless communication shall be selected to best fit the respective type of temperature treatment device and temperature treatment method.

If wireless communication is conducted via radio frequencies, the receiving or transceiving element may be an antenna, especially a wired antenna. Specifically the receiving or transceiving element may comprise at least one of an electrically conductive wire, an electrically conductive band, a strip or strand, preferably in wire-like design, a metallization and an electrically conductive coating. For the purpose of completeness but without going into details, the receiving or transceiving element can comprise light sensitive or light generating elements, if wireless communication via infrared or visible light is involved.

In order to enable wireless communication for as a large volume of the chamber as possible, the receiving or transceiving element may comprise at least one linear section that is oriented parallel to at least one side of door. The at least one side can be at least one of a long side and a short side of the door. Accordingly, the receiving or transceiving element can run in horizontal and vertical direction with respect to the normal operating position of the door in the second position.

The receiving or transceiving element can comprise at least one bent section resulting in at least one of a cove-like, patch-like, meander-like and coiled configuration. By using such sections, the receiving or transceiving element can be adapted to best fit the size or shape of the chamber, such that optimal wireless communication will be available over the volume of the chamber.

The sensor unit can be adapted to passively sense the parameter or parameters. Although an active sensor unit or a combination of active and passive sensor units is also be possible.

If a passive sensor unit is selected, the temperature treatment device can further comprise a power supply unit adapted to wirelessly power the sensor unit. A power supply can be accomplished via at least one receiving or transceiving element, for example by irradiating the sensor unit with electromagnetic radiation.

In order to handle signals to be received from or transmitted to the at least one sensor unit, the receiving or transceiving element can be connected to an electronic receiver or transceiver unit. The receiver or transceiver unit can be positioned remote from the receiving or transceiving element on or within a casing or a frame of the temperature treatment device. In particular it is possible to position the receiver or transceiver unit such that optimal protection against thermal impacts of temperature treatment.

For establishing an electrical connection between the receiver or transceiver unit and the receiving or transceiving element a door hinge of the door can be used. Apart from this or additionally several other possibilities for electrical connections exist. It is possible to provide a contact section on the door and a counterpart contact section on a frame of the temperature treatment device such that an electrical connection is established when the door is closed. The contact section may be a contact pad, for example. Similarly, a plug section on the door and a counterpart plug section on the frame can be used. Further suitable connections are: one or more clamps, springs, screws and the like. Note that the options mentioned beforehand can also be used for establishing electrical connections, such as power supply lines and signalling lines, between the receiver or transceiver unit and other components of the device.

In an alternative configuration, the receiver or transceiver unit is positioned on the door or is integrated in a cavity of the door. Selecting as positioning site the door allows easy access for service, maintenance and cleaning purposes. Further it is easier to connect the receiver or transceiver unit to the receiving or transceiving element already positioned at the door site. Contact lines between the receiver or transceiver unit and the receiving or transceiving element can be shortened, so that signal disruption and noise can be effectively reduced.

For adequately processing the signals, for example received from the sensor unit, it is advantageous to additionally provide an electronic signal processing unit adapted to signal processing.

With this embodiment it is possible that the receiver or transceiver unit and the electronic signal processing constitute a single electronic component. This may be of advantage for retrofitting temperature treatment devices with a function to wirelessly measure relevant parameters during temperature treatment. It shall be mentioned, that the above description relating to the position of the receiver or transceiver unit and related electrical connections applies to the signal processing unit mutatis mutandis.

It is also possible that the receiver or transceiver unit and the electronic processing unit are provided as separate components. This may, for example, be advantageous if the temperature treatment device shall have only one central signal processing unit. In this case the electronic processing unit can be positioned remote from the receiving or transceiving element, within a casing or on an inner frame of the temperature treatment device, for example. Again, at least the above description relating to the possibilities of establishing electrical connections applies mutatis mutandis.

The temperature treatment device may further comprise a monitoring unit, preferably integrated in the electronic processing unit, adapted to monitor the parameter or parameters during temperature treatment of the substance. Such a monitoring unit can be used to automatically control the time course of the temperature treatment process on the basis of at least one of an actual value of the at least one parameter and a time course development of the at least one parameter. In this way a temperature treatment process can be conducted automatically. Here it is of particularly advantage that the invention enables high quality wireless communication leading to better signal quality, which is one of the prerequisites to precisely control the temperature treatment process in an automatic manner.
advantage that the invention enables high quality wireless communication leading to better signal quality, which is one of the prerequisites to precisely control the temperature treatment process in an automatic manner.

The temperature treatment device may, as a further electronic component, comprise a display device for visualizing at least one of a current value and a time course of at least one of the at least one parameter. Such a display device can be used to provide information about at least one of a current status and the time course of the temperature treatment to a user. This may, for certain instances, be advantageous, even if the temperature treatment process is controlled automatically.

The display device can be mounted on or integrated in an outer surface of the door. If the electronic components such as the receiving or transceiving element, the receiver or transceiver unit, the electronic signal processing unit, the monitoring unit and the display device are located at the door site retrofitting of conventional ovens, stoves and the like is easily possible.

The door according to claim 1 comprises an optical transparent section made of glass. Such optical transparent sections enable a user to visually check the substance during temperature treatment. The receiving or transceiving element is at least one of attached and integrated in the transparent section. This is of particular advantage, if the door - except for respective door frames and door columns which are usually made of metal - is substantially made of glass. It is possible to provide one or more receiving or transceiving elements by integrating antennas in wire-like design in a glass window of the door, e. g.
largely avoided, as glass is transparent over a wide range of electromagnetic waves. Positioning the receiving or transceiving element near an edge of the window has the advantage that the receiving or transceiving element can be covered by a frame or faceplate of an outer surface of the door. Thereby it is possible to hide the receiving or transceiving element such that the outer appearance of the door is not disturbed.

Alternatively, or additionally, it is possible that the receiving or transceiving element is at least one of positioned on and integrated in a printing area of the door. Advantages of such position are similar to that mentioned beforehand. In particular it is possible to position the receiving or transceiving element in such a way, that it is hidden by the door printing in the second position of the door. On the one hand, the outer appearance of the oven door is not disturbed; on the other hand the receiving or transceiving element is shielded at least in the second position of the door against damages due to extrinsic impacts. Further, the door printing is generally located on a border side of the door and is therefore much less exposed to impacts resulting from the temperature treatment process. If for example the temperature treating involves heating of the substance, the probability of overheating and related damages can at least be reduced.

It is also possible that at least one of the receiver or transceiver unit, the electronic processing unit, the monitoring unit and the display device is positioned on or integrated in the printing area of the door. Similarly, impacts of the temperature treatment process on the operation and proper function of these electronic components can be avoided.

Other equally well suited positions for at least one of the receiving or transceiving element, the receiver or transceiver unit, the electronic signal processing unit, the monitoring unit and the display device are conceivable. In particular it is possible to at least partially position them in a double walled section of the door. The double walled section may for example be a space between two walls of the door. It is also possible to use as mounting position a double walled section of a frame of the door. Particularly, double walled sections of door columns may be used. Further, at least one of a column, an upper frame section and a lower frame section of the frame can be of double walled construction. Note that the terms "upper" and "lower" refer to the orientation of the door during normal operation, i.e. the second position.

Double walled sections are particularly suitable to protect components positioned therein from extrinsic impacts. In general, double walled sections of the frame are mechanically comparatively stable and can provide protection against mechanical impacts. Protection against other than mechanical impacts is also possible. In particular protection against impacts of the temperature treatment process, for example heat can be obtained via thermal insulation, avoiding overheating and related damages. If the double walled section is at least partially transparent to wireless communication even the receiving or transceiving element can be placed therein.

In connection with positioning electronic components, as for example the receiver or transceiver unit, the signal processing unit or the monitoring unit, within a double walled section, it may be advantageous that the double walled section is adapted for guiding through a cooling medium, preferably air, at least in the area comprising the mounting position. In this way the electronic component or components can be cooled efficiently and protected against overheating, damages can be largely avoided and signal processing can be enhanced.

The double walled section can comprise a ventilation channel, separated by channel walls from the mounting position, such that direct contact of the electronic components with the cooling medium can be prevented. Deposition of dust and the like on the electronic components can be prevented. For effective cooling, a ventilation system can be provided, such that the cooling medium can actively be guided or ventilated through the double walled section or the ventilation channel.

Dependent on temperature stability of the components positioned in the double walled section, the double walled section can be designed such that at least in a region comprising the mounting position, a gaseous, fluid or solid medium for passively cooling at least one of the at least one receiving or transceiving element, receiver or transceiver unit, signal processing unit and monitoring unit is enclosed. Here, the gaseous, fluid or solid medium may be thermal insulating.

The temperature treatment device of the invention is particularly suitable for temperature treatment of food products and beverages, in which case it is possible that the device is selected from but not restricted to the group comprising ovens and stoves adapted to cooking, baking, broiling, browning, roasting, and microwave ovens. Dependent on respective types of heating, the oven, stove and the like can further comprise a temperature treatment unit for heating the substance via at least one of thermal radiation, thermal convection, steam, microwave to Terahertz electromagnetic fields and magnetic fields.

The object of the invention and all advantages and advantageous effects can also be achieved by a temperature treatment device door according to the door of the temperature treatment device or any embodiment thereof described herein.

The invention will now be described in further detail with reference to the drawings, in which
- FIG 1: illustrates a schematic perspective view of a temperature treatment device according to the invention;
- FIG 2: illustrates a schematic plan view of a door of the temperature treatment device;
- FIG 3: illustrates a schematic perspective view of a door column comprising an electronic component; and
- FIG 4: illustrates a schematic sectional view of an embodiment of the door column of FIG 3.

It shall be noted, that like reference numerals denote like elements, or elements that are similar or similar in function. The Figures are schematic and not necessarily true to scale. The invention will be described in connection with a household baking oven, which shall not be construed as limiting the scope of invention. The function of the baking oven is described as far as necessary for understanding the invention.

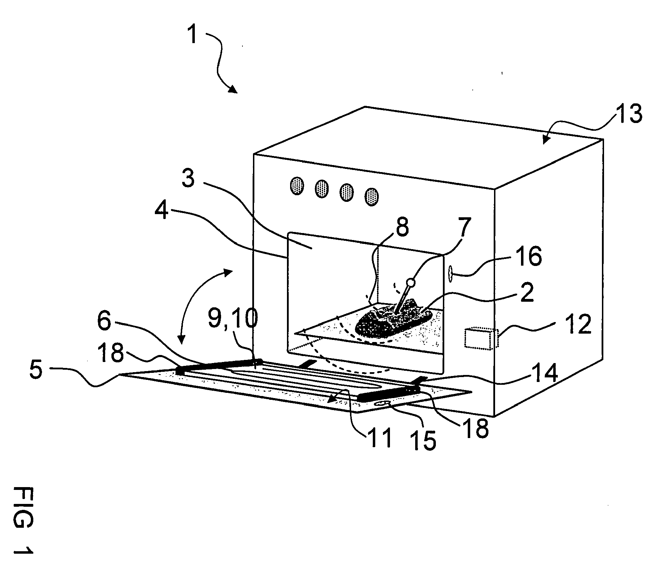

FIG 1 illustrates a perspective view of a household baking oven 1 representative of a temperature treatment device according to the invention. The baking oven 1 is for temperature treatment of a substance. Here, the substance is a food product 2 illustrated as pastry. In general, the food product can be any type of food product. In particular, the food product can be solid, fluid or a mixture thereof, suitable for temperature treatment, i.e. for being heated, in the baking oven 1.

The baking oven 1 comprises a temperature treatment chamber 3. Note, that below, the term "chamber" will be used as a short-term for "temperature treatment chamber". The chamber 3 has a chamber opening 4 via which the food product 2 can be placed in and removed from the chamber 3.

The baking oven 1 further comprises a door 5 designed for releasing and closing the chamber opening 4 in a first and second position, respectively. In the present illustration, the door is in the first position, i.e. the food product 2 has just been positioned in the chamber 3 or is ready for being removed from the chamber 3. During normal operation, i.e. during temperature treatment as for example baking, the door 5 is in the second position (not shown here). In the second position the chamber opening 4 and hence the chamber 3 is tightly closed by the door 5, via appropriate temperature-resistant sealing elements (not shown) for example.

The baking oven 1 further comprises a receiving element 6. The receiving element 6 enables wireless communication of signals from a sensor unit 7 freely placeable within the chamber 3. Wireless communication is schematically indicated by bended lines denoted by reference numeral 8.

The receiving element 6 is designed for receiving signals from the sensor unit 7 only. In the present embodiment only unidirectional wireless communication 8 from the sensor unit 7 to the receiving element 6 is possible. However this shall not limit the scope of invention. It is also possible, that bidirectional wireless communication from and to the sensor unit 7 is enabled. In this case a transceiving element will be used instead of the receiving element 6. Note that the invention covers both unidirectional and bidirectional wireless communication; and these two options are covered by the term "receiving or transceiving element". Parts of the following description are restricted to the term "receiving element", which shall not limit the scope of invention. The most part of the description below will apply to transceiving elements or more generally speaking to "receiving or transceiving elements" as well.

Further, the invention is neither limited to a single receiving or transceiving element nor to a single sensor unit 7. Within the scope of invention it is possible to use more than one receiving or transceiving element and more than one sensor unit 7, in which case the statements below apply mutatis mutandis.

The sensor unit 7 is freely placeable within the chamber 3. That is, the sensor unit 7 is not cable bound and can be placed anywhere within the chamber 3.

With the present embodiment, the sensor unit 7 is adapted to generate a sensor signal suitable for wireless communication 8. The sensor signal is representative of a temperature of the food product 2. A temperature sensor can be provided in a tip of the sensor unit 7, for example, which tip is inserted into the food product 2, as illustrated in FIG 1. In this way, the inner or kernel temperature of the food product 2 can be monitored during baking. The senor unit 7 may optionally comprise further temperature sensors for sensing other relevant temperatures during temperature treatment. Such further temperature sensors, either integrated in one or in different sensor units 7, can for example be used to measure the surface temperature of the food product and the temperature prevailing in the chamber during baking. Sensor units of these types are known for example from DE 10 2004 047 756 A1, DE 10 2005 015 028 A1, DE 29 35 282 A1, EP 0 687 866 B1, US 4,475,024, US 4,518,839 and US 4,230,731, respectively, which are incorporated in full by reference. Further, other types of sensor units 7 are conceivable, as for example sensor units 7 adapted to generate a signal representative of parameters like humidity, pressure, density, food product weight and others.

According to the invention, the receiving element 6 and the door 5 make up one functional unit. With the embodiment shown in FIG 1 two possibilities are conceivable: i) the receiving element 6 is positioned on a surface 9 of the door 5 and ii) the receiving.element 6 is integrated in the door 5.

In the first case, the receiving element 6 can be positioned on an inner surface of an optical transparent section 10 of the door 5 for example. Such optical transparent section 10, e.g. a glass segment, enables a user to visually control the time course of baking. The inner surface can be a surface facing towards the.chamber 3 in the second position of the door 5. However, it is also possible, that the inner surface faces an interspace between two walls of the door 5. This is the case with a door 5 comprising two or multiple walls for enhancing stability and thermal insulation for example.

In a similar embodiment, the door 5 can comprise a panel attached to a door frame, which panel comprises one or several glass plates, preferably in sandwich like design. Such a panel can comprise up to four or more glass plates. In this case, the transparent section 10 is integrated part of the panel.

The receiving element 6 can also be placed on an outer surface of the door 5, which surface faces away from the chamber 3 in the second position of the door 5. Such outer surface of the door may be an imprinting section of the panel mentioned beforehand, which section is intended for imprints and the like. The imprinting section may be located anywhere on the outer surface, for example on an upper and/or lower part of the panel.

In the second case, i.e. if the receiving element 6 is integrated in the door, the receiving element 6 may be integral part of nearly any section of the door 5, provided that this section is transparent to wireless communication. Therefore, the receiving element 6 can be integrated in the optical transparent section 10 made from glass for example. Such optical transparent sections 10 generally are transparent to electromagnetic waves typically used for wireless communication. By integrating or embedding the receiving element 6 into the glass segment, the receiving element 6 can be protected against or shielded from extrinsic impacts. In the case that the door 5 comprises several walls, it is possible that the receiving element 6 is integrated in any of these walls.

Other possibilities for arranging the receiving element 6 are conceivable and are described further below.

Amongst others, the position resulting in optimal quality of wireless communication 8 will vary from case to case. Dependences on the type of wireless communication 8, materials used for the door 5 and the kind of temperature treatment method are conceivable. It shall be mentioned, that the type of temperature treatment can be of any type, comprising but not limited to thermal radiation, thermal convection, steam, electromagnetic fields and magnetic fields.

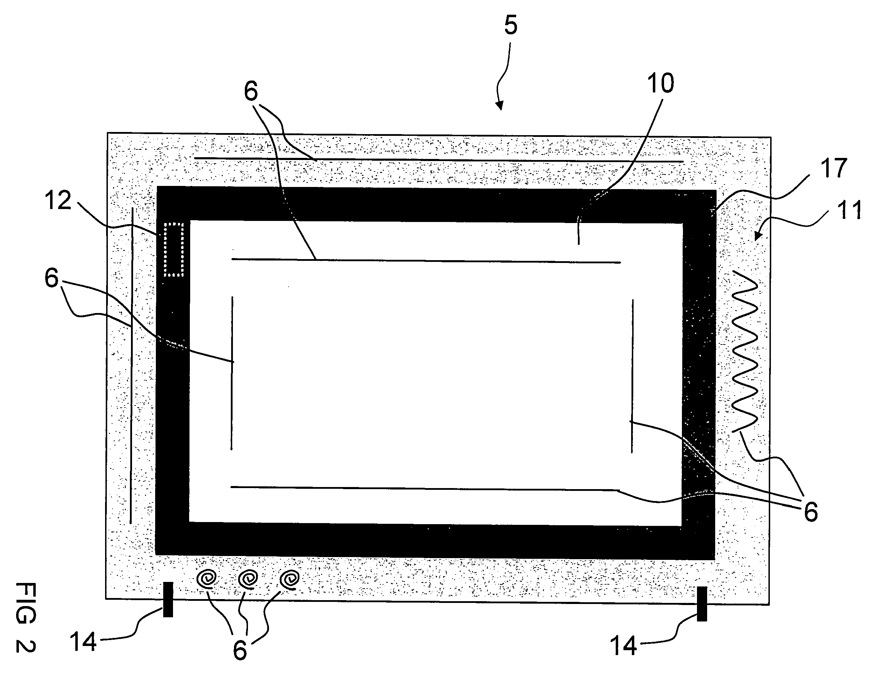

The type of wireless communication 8 can be based on at least one of electromagnetic waves ranging from radio frequencies to microwave, even up to Terahertz frequencies and sound waves. In the case of electromagnetic waves, the receiving element 6 can be designed as antenna. The antenna may be a conductive wire, as in FIG 1 and 2, an electrically conductive band, strip or strand, preferably in wire-like design, and a metallization or an electrically conductive coating of the surface 9. Other types of receiving elements 6 may be selected according to respective types of wireless communication.

The type of wireless communication, the type of receiving element and the type of temperature treatment method are interdependent to a certain extent. However, as soon as the type of temperature treatment device is known, it will be easy to select the appropriate combination of receiving or transceiving element and wireless communication, including but not limited to the possibilities given above.

The inventive arrangement of the receiving element 6 has several advantages as compared to conventional temperature treatment devices. With the inventive concept it is much easier to freely position or integrate the receiving element 6 as the door 5 is far more flexible with regard to constructive modifications as compared to chamber walls usually made of metal. Further, effective and undisturbed wireless communication between the receiving element 6 and the sensor unit 7 can be achieved almost over the whole volume of the chamber 3. A further advantage is that nearly any temperature treatment device can be retrofitted at low cost and effort without the need for extensive constructive changes. In addition, the arrangement according to the invention allows easy access, access-service and maintenance, including cleaning and exchange of at least the receiving element 6.

In the embodiment illustrated in FIG 1 the receiving element 6 has a meander-like design. Of course, this is not limiting the scope of invention. The receiving element 6 can be of any suitable design and comprise arbitrary straight, coiled, bent, meander-like, patch-like and cove-like sections. This is useful for adapting the shape of the receiving element 6 to high quality wireless communication 8. Linear sections of the receiving element 6 can run parallel to at least one side or edge of the door 5 and a wall of the door, respectively. The side may be a long side or short side. In this case, the linear section of the receiving element 6 is oriented in horizontal or vertical direction with respect to the second position the door 5.

FIG 2 illustrates a plan view of the door 5 in the first position when viewed from top. That is, the surface looked at in FIG 2 is directed towards the chamber 3 if the door 5 is in the second position. Several possibilities with respect to shape and position of the receiving element 6 addressed above are exemplified. Note that the number, shapes and positions may vary from case to case. In FIG 2, the receiving elements 6 are antennas in wire-like design. This however shall not restrict the scope of invention; all the other possibilities mentioned further above are conceivable and the exemplified positions can be used for other types of receiving elements as well.

In the optical transparent section 10 in total four antennas 6 are arranged, two running in vertical and two running in horizontal direction. In contrast to FIG 1, the antennas 6 in the optical transparent section 10 are not meander-shaped.

Further, receiving elements 6 are arranged in a printing area 11 of the door 5. In the top and left hand sections of the printing area 11 two receiving elements 6 run in horizontal and vertical direction, respectively. The antenna 6 in the right hand section is meander-shaped, whereas the antennas 6 in the bottom section of the printing area 11 are of coil-like design.

The sensor unit 7 preferably is a passive sensor to passively sense at least one of the parameters mentioned above. In connection with passive sensors, the temperature treatment device may comprise a power supply unit adapted to wirelessly power the passive sensor unit, preferably via a transceiving element. In the event that a transceiving element is used for powering the sensor unit, a bidirectional wireless communication is provided. In this context it shall be mentioned that wireless communication is not restricted to unidirectional or bidirectional transmission of signals, but also comprises for example transmission of energy consumed by the sensor unit and the like.

However, active sensors shall not be excluded. Therefore the sensor unit 7 may be an active sensor, as well.

For handling wireless communication 8 with the sensor unit 7, the baking oven 1 may further comprise at least one electronic receiver or transceiver unit. For the term "receiver or transceiver unit" the same applies as mentioned in connection with the term "receiving or transceiving element". That is, the receiver or transceiver unit can either be a receiver unit or a transceiver unit for unidirectional and bidirectional wireless communication, respectively. For convenience, the description below is restricted to the term "receiver unit", as far as nothing else is indicated. This shall however not limit the scope of invention. Rather, the description below similarly applies as far as appropriate to transceiver units in the case of bidirectional wireless communication.

Amongst others, the receiver unit can be adapted to amplify signals received from the sensor unit 7. Other functions relevant for receiving signals in the course of wireless communication are possible, as for example wirelessly providing power for operation of the sensor unit. It shall explicitly be noted, that more than one receiver or transceiver units can be provided, in which case the description below applies mutatis mutandis.

The receiver unit can, in one embodiment, be positioned remote from the receiving element 6. An example is given in FIG 1, in which a receiver unit 12 is placed within a casing 13 or frame of the baking oven 1. As the receiver unit 12 is hidden by the casing 13, it is depicted by a dotted box. In principle, any position within the casing is possible. Preferably, the receiver unit is positioned near a door hinge 14 of the door 5. In doing so, it is easier to connect the receiver unit 12 to the receiving element 6 via the door hinge 14 or door hinges 14 without the risk of overlength connection lines, which could readily lead to signal disruption. Other types of connection between the receiver unit 12 and the receiving element 6 at least in the second position of the door 5 can be a least one of a contact section 15 on the door 5 and a counterpart contact section 16 on a frame of the baking oven 1, a plug section on the door 5 and a counterpart plug section on the frame, one or several clamps, and one or several springs (not shown).

Alternatively, the receiver unit 12 can be positioned on or integrated in a cavity of the door 5. This allows to position the receiver unit 12 close to the receiving element 6, leading to shortened connection lines, which in turn can enhance signal quality. For example, the receiver unit 12 can be positioned within a cavity of a door frame 17. This is the case with FIG 2, in which the receiver unit 12 is illustrated as dotted square in the top left. Other cavities of the door 5 are conceivable. If the door 5 for example has a double walled section, then the receiver unit 12 can be placed in an interspace between the walls. Within the scope of invention, a double walled section of the door is any section comprising at least two adjacent walls having an interspace therebetween.

In general, any location of the door frame 17 can be used as a mounting position for the receiver unit 12. In particular, the receiver unit can be placed within upper and lower parts of the frame, running in horizontal direction in FIG 2. Further, vertical sections of the door frame 17 can be used, which vertical sections are also known as door columns are denoted by reference numeral 18 in FIG 1.

In a further embodiment, the baking oven 1 comprises an electronic signal processing unit adapted to signal processing of the signals received from or transmitted to the sensor unit. In the present embodiment, the signal processing unit and the receiver unit 12 are combined to form one single electronic component. That is, the signal processing unit is integrated in the receiver unit 12 or vice versa. This however shall not limit the scope the invention. It is also possible, that the receiver unit 12 and the signal processing unit are provided as separate electronic components.

In the case that the receiver unit 12 and the signal processing unit form separate electronic components, the electronic processing unit can be positioned remote from the receiving element 6 and the receiver unit 12, respectively. For example, it is possible, that the signal processing unit is positioned within the casing 13 or on an inner frame of the baking oven 1. Here, the signal processing unit and the receiver unit 12 can be located at different positions within the casing 13, or the signal processing unit can be located within the casing 13 and the receiver unit 12 can be located on or in the door 5. In the latter case, the signal processing unit and the receiver unit 12 may be connected via similar connections and connectors as mentioned above, i.e. hinges, contact sections, plugs, clamps, springs and the like.

Returning now to the case, in which the mounting position of the electronic component is within a door column 18 and in which the signal processing unit and the receiver unit 12 are combined to form a single electronic component. For the latter reason, the electronic component will also be denoted by reference numeral 12. As far as appropriate, the following description applies mutatis mutandis to at least one of the receiving element 6, the receiver unit 12, the signal processing unit and further components mentioned below, irrespective of whether they are provided individually or in arbitrary combination.

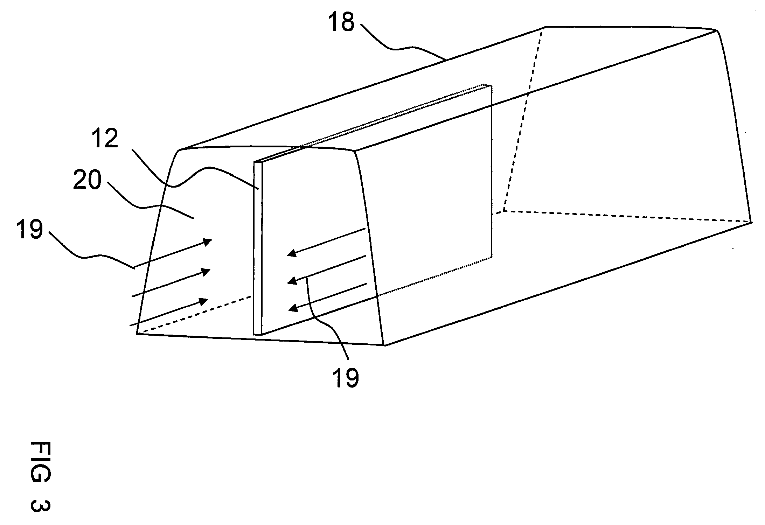

With the present case, the door column 18 can be adapted to guiding through a cooling medium, preferably air, for cooling the electronic component 12. This situation is illustrated in FIG 3 illustrating a schematic perspective view of the door column 18 in which the electronic component 12 is positioned. An airflow 19, or more generally speaking a flow of cooling medium, is passed through a ventilation channel 20 made up of the walls of the door column 18, in order to cool the electronic component 12. Cooling of the electronic component 12 is advantageous, as during baking, the space within the door column 18 is heated to temperatures that may influence, may cause malfunction or, in the worst case, may damage the electronic component 12. In addition, heat generated by the electronic component during operation can be dissipated.

In FIG 3, the airflow 19 is bidirectionally guided through the door column 18 in a counterflow-like manner. This is advantageous if the door column 18 is divided into at least two sub-chambers. However, unidirectional airflow 19 is also possible.

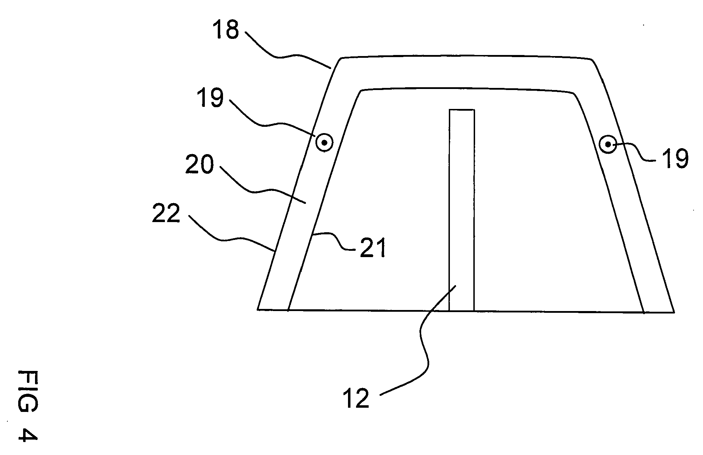

FIG 4 illustrates a schematic sectional view of an embodiment of the door column 18. Again, the electronic component 12 is positioned within the door column 18. The embodiment of FIG 4 differs from that in FIG 3 in that the ventilation channel 20 is separated from the electronic component 12. The ventilation channel 20 has an inner 21 and an outer channel wall 22. The outer channel wall 22 is identical to an outer wall of the door column 18. The inner channel wall 21 is displaced from the outer channel wall 22 leaving an interspace therebetween, which constitutes the ventilation channel 20. The ventilation channel 20 is used for guiding through the airflow 19 similarly as with FIG 3. With the present case, the airflow 19 is unidirectional, but can also be bidirectional.

The airflow 19 indirectly cools the space inside the inner channel wall 21 so that the electronic component 12 can be prevented from being overheating during baking. In addition, heat generated by the electronic component 12 can be dissipated. A further advantage of the embodiment shown in FIG 4 is that the electronic component 12 is shielded by the inner channel wall 21 from the airflow 19. Therefore the electronic component 12 can be prevented from getting in contact with dust and other harmful substances contained in the airflow 19.

Still with reference to FIG 3 and FIG 4, the baking oven 1 can further comprise a ventilation system (not shown) for actively guiding the airflow 19 through the ventilation channels 20. The ventilation system can either as a whole be part of the door 5 or at least parts thereof, e. g. a ventilator for generating the airflow 19, can be positioned within the casing 13. In the latter case a connection between ventilation ducts located at the door side and ducts located at the casing side can comprise a flexible duct or plug-like connectors for establishing a connection between the ventilation ducts at least in the second position of the door 5.

Now with particular reference to FIG 4, instead of guiding the airflow 19 through the ventilation channel 20, the interspace between the inner 21 and outer channel walls 22 may at least partially be filled with an insulating medium, which may be gaseous, fluid or solid. Thermal conduction through the channel walls 21 and 22 may be enhanced by the insulating medium. With particular reference to FIG 4, if the interspace between the inner 21 and outer channel wall 22 is filled with an insulating medium, the space surrounded by the inner channel wall 21 can be used as ventilation channel, so that both ventilation and insulation can be provided.

It is also possible, that the space surrounding the electronic component 12 is at least partially filled with an insulating medium, preferably gaseous or solid. In the case of FIG 3, this space corresponds to the ventilation channel 20. In the case that this space is partially filled, extra cooling may be provided by airflow 19.

In a further embodiment, the baking oven 1 can comprise a monitoring unit (not shown) adapted to monitor the at least one parameter during temperature treatment. The monitoring unit can be integral part of the electronic component 12. However it is also possible that the monitoring unit is provided as a separate component, in which case the above description of establishing a connection between electronic processing unit and receiver unit and effective cooling applies mutatis mutandis.

The monitoring unit can be adapted to automatically control the course of temperature treatment. The automatic control can be based on at least one actual value of one of the parameters. It is also possible, that the automatic control uses information about the time course development of at least one parameter sensed by the sensor unit 7.

The baking oven 1 may further comprise a display device for visualization of at least one of a current value or time course development of the parameter. The display device can be integrated in the casing 13. However, it is also possible to mount the display device on or integrate it in the door 5. Here, the above description of establishing a connection between electronic processing unit and receiver unit and effective cooling applies mutatis mutandis.

Providing the electronic components and the receiving or transceiving element on the door 5 has the advantages of easy retrofitting, easy access for maintenance and service and the like.

Although the invention has been described in connection with a baking oven 1, the invention can be applied to other types of temperature treatment devices, wherein all the advantages and advantageous effects described in connection with the baking oven 1 can be achieved at least in a similar way.

### List of reference numerals

- 1: baking oven
- 2: food product
- 3: temperature treatment chamber
- 4: chamber opening
- 5: door
- 6: receiving element
- 7: sensor unit
- 8: wireless communication
- 9: surface
- 10: optical transparent section
- 11: printing area
- 12: receiver unit
- 13: casing
- 14: door hinge
- 15: contact section
- 16: counterpart contact section
- 17: door frame
- 18: door column
- 19: airflow
- 20: ventilation channel
- 21: inner channel wall
- 22: outer channel wall

## Claims

1. Temperature treatment device (1) designed for active temperature treatment of a substance (2), the substance (2) being fluid, solid or a mixture thereof, the temperature treatment device (1) comprising:
- a temperature treatment chamber (3) adapted to receive therein the substance (2) via a chamber opening (4);
- a door (5) designed for releasing and closing the chamber opening (4) in a first and second position, respectively;
- at least one receiving or transceiving element (6) enabling at least unidirectional wireless communication (8) of signals from and/or to at least one sensor unit (7) which is placeable at or within the temperature treatment chamber (3);
**characterized in that**
- the door (5) comprising an optically transparent glass section (10), and that at least one receiving or transceiving element (6) being at least one of integrated in the door (5) and positioned on a surface (9) of the door (5) is at least one of attached to and integrated in the transparent glass section (10).

2. Temperature treatment device (1) according to claim 1, wherein the wireless communication (8) comprises a bidirectional transmission of signals from and to the at least one sensor unit (7).

3. Temperature treatment device (1) according to at least one of claims 1 and 2 wherein the at least one sensor unit (7) is adapted to generate a sensor signal suitable for the wireless communication (8) and representative of at least one parameter to be monitored during temperature treatment of the substance (2),
wherein preferably the at least one parameter is selected from the group comprising temperature, humidity, pressure, density, food product weight, wherein the temperature preferably being at least one of a surface temperature of the substance (2), an inner temperature of the substance (2) and a chamber temperature.

4. Temperature treatment device (1) according to at least one of claims 1 to 3, wherein the wireless communication (8) is conducted on the basis of electromagnetic waves, in particular electromagnetic waves having frequencies ranging from radio frequencies to Petahertz frequencies, in particular radio waves, microwaves, infrared and/or visible light, and/or sound waves.

5. Temperature treatment device (1) according to claim 4, wherein the at least one receiving or transceiving element (6) is an antenna, preferably a wired antenna, designed for communication of electromagnetic wave signals,the antenna preferably comprising at least one of an electrically conductive wire, an electrically conductive band, a strip or strand, preferably in wire-like design, a metallization and an electrically conductive coating, wherein
the antenna preferably comprising at least one of at least one linear section, the at least one linear section being oriented parallel to at least one side of the door (5), the at least one side being at least one of a long side and a short side and at least one bent section resulting in at least one of a cove-like, patch-like, meander-like and coiled configuration of the at least one receiving or transceiving element (6).

6. Temperature treatment device (1) according to at least one of claims 1 to 5, wherein at least one of the at least one sensor unit (7) is adapted to passively sense the at least one parameter, or wherein at least one of the at least one sensor unit (7) is an active sensor unit.

7. Temperature treatment device (1) according to at least one of claims 1 to 6, wherein the at least one receiving or transceiving element (6) is connected to an electronic receiver or transceiver unit (12) wherein in particular the receiver or transceiver unit (12) is positioned remote from the at least one receiving or transceiving element (6) on or within a casing (12) or a frame of the temperature treatment device (1), on the door (5) or integrated in a cavity of the door (5), wherein preferably at least one of a door hinge (14) of the door (5), a contact section (16) on the door (5) and a counterpart contact section (16) on a frame of the temperature treatment device (1), a plug section on the door (5) and a counterpart plug section on a frame of the temperature treatment device (1), one or several clamps, and one or several springs is/are used for establishing a contact between the at least one receiving or transceiving element (6) and the receiver or transceiver unit (12), at least in the second position of the door (5).

8. Temperature treatment device (1) according to claim 7, further comprising an electronic signal processing unit adapted to signal processing of the signals, wherein in particular the receiver or transceiver unit (12) and the electronic signal processing unit constitute a single electronic component (12) or the receiver or transceiver unit (12) and the electronic processing unit are provided as separate components.

9. Temperature treatment device (1) according to claim 8, wherein the electronic processing unit is positioned remote from the receiver or transceiver unit (12), within a casing (13) or on an inner frame of the temperature treatment device (1), wherein preferably at least one of a door hinge (14) of the door (5), a contact section (15) on the door (5) and a counterpart contact section (16) on a frame of the temperature treatment device (1), a plug section on the door (5) and a counterpart plug section on a frame of the temperature treatment device (1), one or several clamps, and one or several springs is/are used for establishing a contact between the electronic processing unit and the receiver or transceiver unit (12), at least in the second position of the door (5).

10. Temperature treatment device (1) according to claim 8 or 9, further comprising a monitoring unit, preferably integrated in the electronic processing unit, adapted to monitor the at least one parameter during temperature treatment of the substance (2), wherein in particular the monitoring unit is further adapted to automatically control the course of the temperature treatment, on the basis of at least one of an actual value of the at least one parameter and a time course development of the at least one parameter.

11. Temperature treatment device (1) according to at least one of claims 8 to 10, further comprising a display device adapted to visualize at least one of a current value and a time course of at least one of the at least one parameter, wherein in particular the display device is mounted on or integrated in an outer surface of the door (5) or on or integrated in an outer surface of a casing (13) of the temperature treatment device (1).

12. Temperature treatment device (1) according to at least one of claims 7 to 11, wherein at least one of the at least one receiving or transceiving element (6), the receiver or transceiver unit (12), the electronic processing unit, the monitoring unit and the display device is at least one of positioned on and integrated in a printing area (11) of the door (5).

13. Temperature treatment device (1) according to at least one of claims 7 to 12, wherein a mounting position of least one of the receiver or transceiver unit (12), the electronic signal processing unit and the monitoring unit is at least one of a double walled section of the door (5) and a double walled section of a frame (17) of the door (5), preferably a double walled section of a door column (18) or of an upper frame of the door (5),
wherein in particular at least in an area comprising the mounting position, the double walled section is adapted for guiding through a cooling medium, preferably air, for cooling at least one of the receiver or transceiver unit (12), the signal processing unit and the monitoring unit,
wherein in particular the double walled section comprises a ventilation channel (20) separated by channel walls (21, 22) from the mounting position.

14. Temperature treatment device (1) according to claim 13, wherein the temperature treatment device (1) further comprises a ventilation system for actively ventilating the cooling medium through the double walled section and/or
wherein at least in a region comprising the mounting position, a gaseous, fluid or solid medium for passively cooling of at least one of the receiver or transceiver unit (12), signal processing unit and monitoring unit is enclosed.

15. Temperature treatment device (1) according to at least one of claims 1 to 14, wherein the substance (2) is at least one of a food product and beverage, the temperature treatment device (1) being selected from but not restricted to the group comprising ovens and stoves adapted to cooking, baking, broiling, browning, roasting, and microwave ovens and further comprising a temperature treatment unit adapted to heat the substance (2) via at least one of thermal radiation, thermal convection, steam, microwave to up to Petahertz electromagnetic fields and magnetic fields.

## Patentansprüche

1. Temperaturbehandlungsvorrichtung (1), die zur aktiven Temperaturbehandlung einer Substanz (2) vorgesehen ist, wobei die Substanz (2) fließfähig, fest oder eine Mischung davon ist, wobei die Temperaturbehandlungsvorrichtung (1) umfasst:
- eine Temperaturbehandlungskammer (3), die adaptiert ist, um darin mithilfe einer Kammeröffnung (4) die Substanz (2) aufzunehmen;
- eine Tür (5), die zum Freigeben und Schließen der Kammeröffnung (4) in einer ersten beziehungsweise zweiten Position vorgesehen ist;
- mindestens ein empfangendes oder übermittelndes Element (6), das mindestens unidirektionale Drahtloskommunikation (8) von Signalen von mindestens einer Sensoreinheit (7) und/oder zu dieser ermöglicht, wobei die Sensoreinheit an oder innerhalb der Temperaturbehandlungskammer (3) platzierbar ist;
**dadurch gekennzeichnet, dass**
- die Tür (5) einen optisch transparenten Glasabschnitt (10) umfasst, und dass mindestens ein empfangendes oder übermittelndes Element (6), das mindestens eines von in die Tür (5) integriert und an einer Oberfläche (9) der Tür (5) positioniert ist, mindestens eines von an dem transparenten Glasabschnitt (10) angebracht und in diesen integriert ist.

2. Temperaturbehandlungsvorrichtung (1) nach Anspruch 1, wobei die Drahtloskommunikation (8) eine bidirektionale Übertragung von Signalen von der mindestens einen Sensoreinheit (7) und zu dieser umfasst.

3. Temperaturbehandlungsvorrichtung (1) nach mindestens einem der Ansprüche 1 und 2, wobei die mindestens eine Sensoreinheit (7) adaptiert ist, um ein Sensorsignal zu generieren, das für die Drahtloskommunikation (8) geeignet ist und für mindestens einen während der Temperaturbehandlung der Substanz (2) zu überwachenden Parameter repräsentativ ist,
wobei der mindestens eine Parameter vorzugsweise ausgewählt ist aus der Gruppe umfassend Temperatur, Feuchtigkeit, Druck, Dichte, Nahrungsproduktgewicht, wobei die Temperatur vorzugsweise mindestens eine von einer Oberflächentemperatur der Substanz (2), einer Innentemperatur der Substanz (2) und einer Kammertemperatur ist.

4. Temperaturbehandlungsvorrichtung (1) nach mindestens einem der Ansprüche 1 bis 3, wobei die Drahtloskommunikation (8) auf Grundlage von elektromagnetischen Wellen durchgeführt wird, insbesondere elektromagnetischen Wellen mit Frequenzen im Bereich von Radiofrequenzen bis Petahertzfrequenzen, insbesondere Radiowellen, Mikrowellen, Infrarot und/oder sichtbarem Licht, und/oder Schallwellen.

5. Temperaturbehandlungsvorrichtung (1) nach Anspruch 4, wobei das mindestens eine empfangende oder übermittelnde Element (6) eine Antenne, vorzugsweise eine Drahtantenne ist, die zur Kommunikation von elektromagnetischen Wellensignalen vorgesehen ist, wobei die Antenne vorzugsweise mindestens eines von einem elektrisch leitenden Draht, einem elektrisch leitenden Band, einem Streifen oder Strang, vorzugsweise in drahtartigem Design, einer Metallisierung und einer elektrisch leitenden Beschichtung umfasst, wobei
die Antenne vorzugsweise mindestens einen von mindestens einem linearen Abschnitt, wobei der mindestens eine lineare Abschnitt parallel zu mindestens einer Seite der Tür (5) orientiert ist, die mindestens eine Seite mindestens eine von einer langen Seite und einer kurzen Seite ist, und mindestens einem gebogenen Abschnitt umfasst, was zu mindestens einer von einer buchtartigen, fleckartigen, mäanderartigen und spiraligen Konfiguration des mindestens einen empfangenden oder übermittelnden Elements (6) führt.

6. Temperaturbehandlungsvorrichtung (1) nach mindestens einem der Ansprüche 1 bis 5, wobei mindestens eine von der mindestens einen Sensoreinheit (7) adaptiert ist, um den mindestens einen Parameter passiv abzufühlen, oder wobei mindestens eine der mindestens einen Sensoreinheit (7) eine aktive Sensoreinheit ist.

7. Temperaturbehandlungsvorrichtung (1) nach mindestens einem der Ansprüche 1 bis 6, wobei das mindestens eine empfangende oder übermittelnde Element (6) mit einer elektronischen Empfangs- oder Übermittlungseinheit (12) verbunden ist, wobei insbesondere die Empfangs- oder Übermittlungseinheit (12) entfernt von dem mindestens einen empfangenden oder übermittelnden Element (6) auf oder innerhalb eines Gehäuses (12) oder eines Rahmens der Temperaturbehandlungsvorrichtung (1), an der Tür (5) oder integriert in einen Hohlraum der Tür (5) positioniert ist, wobei vorzugsweise mindestens eines von einem Türscharnier (14) der Tür (5), einem Kontaktabschnitt (16) an der Tür (5) und einem Gegenkontaktabschnitt (16) an einem Rahmen der Temperaturbehandlungsvorrichtung (1), einem Steckerabschnitt an der Tür (5) und einem Gegensteckerabschnitt an einem Rahmen der Temperaturbehandlungsvorrichtung (1), einer oder mehreren Klemmen und einer oder mehreren Federn verwendet wird/werden, um einen Kontakt zwischen dem mindestens einen empfangenden oder übermittelnden Element (6) und der Empfangs- oder Übermittlungseinheit (12) mindestens in der zweiten Position der Tür (5) herzustellen.

8. Temperaturbehandlungsvorrichtung (1) nach Anspruch 7, ferner umfassend eine elektronische Signalverarbeitungseinheit, die zur Signalverarbeitung der Signale adaptiert ist, wobei insbesondere die Empfangs- oder Übermittlungseinheit (12) und die elektronische Signalverarbeitungseinheit eine einzige elektronische Komponente (12) bilden oder die Empfangs- oder Übermittlungseinheit (12) und die elektronische Verarbeitungseinheit als separate Komponenten bereitgestellt werden.

9. Temperaturbehandlungsvorrichtung (1) nach Anspruch 8, wobei die elektronische Verarbeitungseinheit entfernt von der Empfangs- oder Übermittlungseinheit (12) innerhalb eines Gehäuses (13) oder an einem Innenrahmen der Temperaturbehandlungsvorrichtung (1) positioniert ist, wobei vorzugsweise mindestens eines von einem Türscharnier (14) der Tür (5), einem Kontaktabschnitt (15) an der Tür (5) und einem Gegenkontaktabschnitt (16) an einem Rahmen der Temperaturbehandlungsvorrichtung (1), einem Steckerabschnitt an der Tür (5) und einem Gegensteckerabschnitt an einem Rahmen der Temperaturbehandlungsvorrichtung (1), einer oder mehreren Klemmen und einer oder mehreren Federn verwendet wird/werden, um einen Kontakt zwischen der elektronischen Verarbeitungseinheit und der Empfangs- oder Übermittlungseinheit (12) mindestens in der zweiten Position der Tür (5) herzustellen.

10. Temperaturbehandlungsvorrichtung (1) nach Anspruch 8 oder 9, ferner umfassend eine Überwachungseinheit, die vorzugsweise in die elektronische Verarbeitungseinheit integriert ist und zum Überwachen des mindestens einen Parameters während der Temperaturbehandlung der Substanz (2) adaptiert ist, wobei die Überwachungseinheit insbesondere ferner zur automatischen Steuerung des Verlaufs der Temperaturbehandlung auf Grundlage von mindestens einem von einem tatsächlichen Wert des mindestens einen Parameters und einer Entwicklung des mindestens einen Parameters im Zeitverlauf adaptiert ist.

11. Temperaturbehandlungsvorrichtung (1) nach mindestens einem der Ansprüche 8 bis 10, ferner umfassend eine Anzeigevorrichtung, die zum Visualisieren von mindestens einem von einem aktuellen Wert und einem Zeitverlauf von mindestens einem des mindestens einen Parameters adaptiert ist, wobei die Anzeigevorrichtung insbesondere an einer Außenseite der Tür (5) oder in diese integriert oder an einer Außenfläche des Gehäuses (13) der Temperaturbehandlungsvorrichtung (1) montiert oder in diese integriert ist.

12. Temperaturbehandlungsvorrichtung (1) nach mindestens einem der Ansprüche 7 bis 11, wobei mindestens eines von dem mindestens einen empfangenden oder übermittelnden Element (6), der Empfangs- oder Übermittlungseinheit (12), der elektronischen Verarbeitungseinheit, der Überwachungseinheit und der Anzeigevorrichtung mindestens eines von auf einer Druckfläche (11) der Tür (5) positioniert oder darin integriert ist.

13. Temperaturbehandlungsvorrichtung (1) nach mindestens einem der Ansprüche 7 bis 12, wobei eine Montageposition von mindestens einer der Empfangs- oder Übermittlungseinheit (12), der elektronischen Signalverarbeitungseinheit und der Überwachungseinheit an mindestens einem von einem doppelwandigen Abschnitt der Tür (5) und einem doppelwandigen Abschnitt eines Rahmens (17) der Tür (5), vorzugsweise einem doppelwandigen Abschnitt einer Türsäule (18) oder einem oberen Rahmen der Tür (5) ist, wobei der doppelwandige Abschnitt insbesondere in mindestens einem Bereich, der die Montageposition umfasst, adaptiert ist, um ein Kühlmedium, vorzugsweise Luft, zum Kühlen mindestens einer von der Empfangs- oder Übermittlungseinheit (12), der Signalverarbeitungseinheit und der Überwachungseinheit hindurchzuführen, wobei der doppelwandige Abschnitt insbesondere einen Be-/Entlüftungskanal (20) umfasst, der durch Kanalwände (21, 22) von der Montageposition getrennt ist.

14. Temperaturbehandlungsvorrichtung (1) nach Anspruch 13, wobei die Temperaturbehandlungsvorrichtung (1) ferner ein Be-/Entlüftungssystem zum aktiven Be-/Entlüften des Kühlmediums durch den doppelwandigen Abschnitt umfasst, und/oder wobei mindestens in einer Region, welche die Montageposition umfasst, ein gasförmiges, fließfähiges oder festes Medium zum passiven Kühlen von mindestens einem von der Empfangs- oder Übermittlungseinheit (12), Signalverarbeitungseinheit und Überwachungseinheit eingeschlossen ist.

15. Temperaturbehandlungsvorrichtung (1) nach mindestens einem der Ansprüche 1 bis 14, wobei die Substanz (2) mindestens eines von einem Nahrungsprodukt und einem Getränk ist, wobei die Temperaturbehandlungsvorrichtung (1) ausgewählt aus der Gruppe umfassend Öfen und Herde, die zum Garen, Backen, Grillen, Bräunen, Rösten adaptiert sind, und Mikrowellengeräte, jedoch nicht darauf begrenzt ist, und ferner eine Temperaturbehandlungseinheit umfasst, die adaptiert ist, um die Substanz (2) mithilfe mindestens einer von Wärmestrahlung, Wärmekonvektion, Wasserdampf, Mikrowelle bis zu Petahertz-elektromagnetischen Feldern und Magnetfeldern zu erwärmen.

## Revendications

1. Dispositif de traitement thermique (1) conçu pour un traitement thermique actif d'une substance (2), la substance (2) étant fluide, solide, ou un mélange de ceux-ci (1), le dispositif de traitement thermique comprenant :
- une chambre (3) de traitement thermique apte à recevoir dans celle-ci la substance (2) par l'intermédiaire d'une ouverture de chambre (4);
- une porte (5) conçue pour libérer et fermer l'ouverture (4) de chambre dans une première et une seconde position, respectivement;
- au moins un élément de réception ou d'émission-réception (6) permettant au moins une communication sans fil unidirectionnelle (8) de signaux à partir et/ou vers au moins une unité de détection (7) qui peut être placée au niveau ou à l'intérieur de la chambre de traitement thermique (3);
**caractérisé en ce que**
- la porte (5) comprend une section en verre optiquement transparent (10), et **en ce qu'**au moins un élément de réception ou d'émission-réception (6) qui est intégré dans la porte (5) et/ou positionné sur une surface (9) de la porte (5) est attaché à et/ou intégré dans la section en verre transparent (10).

2. Dispositif de traitement thermique (1) selon la revendication 1,
dans lequel la communication sans fil (8) comprend une transmission bidirectionnelle de signaux à partir de et vers ladite au moins une unité de détection (7).

3. Dispositif de traitement thermique (1) selon au moins l'une des revendications 1 et 2, dans lequel ladite au moins une unité de détection (7) est conçue pour générer un signal de détection approprié pour la communication sans fil (8) et représentatif d'au moins un paramètre à surveiller pendant le traitement thermique de la substance (2),
dans lequel de préférence ledit au moins un paramètre est choisi dans le groupe comprenant la température, l'humidité, la pression, la densité, et le poids d'un produit alimentaire,
dans lequel la température est de préférence au moins l'une d'une température de surface de la substance (2), d'une température interne de la substance (2) et d'une température de la chambre.

4. Dispositif de traitement thermique (1) selon au moins l'une des revendications 1 à 3, dans lequel la communication sans fil (8) est réalisée sur la base d'ondes électromagnétiques, en particulier d'ondes électromagnétiques ayant des fréquences allant des fréquences radio aux fréquences Pétahertz, en particulier les ondes radio, les micro-ondes, la lumière infrarouge et/ou visible, et/ou les ondes sonores.

5. Dispositif de traitement thermique (1) selon la revendication 4,
dans lequel ledit au moins un élément de réception ou d'émission-réception (6) est une antenne, de préférence une antenne filaire, conçue pour la communication de signaux d'ondes électromagnétiques, l'antenne comprenant de préférence au moins l'un d'un fil conducteur de l'électricité, d'une bande conductrice de l'électricité, d'un cordon ou d'un brin, de préférence sous forme de fil, d'une métallisation et d'un revêtement conducteur de l'électricité, dans lequel
l'antenne comprend de préférence au moins l'une d'au moins une section linéaire, ladite au moins une section linéaire étant orientée parallèlement à au moins un côté de la porte (5), ledit au moins un côté étant au moins l'un d'un côté long et d'un côté court, et d'au moins une section courbée résultant en au moins l'une d'une configuration en forme d'anse, en forme de plaque, en forme de méandre et spiralée dudit au moins un élément de réception ou d'émission-réception (6).

6. Dispositif de traitement thermique (1) selon au moins l'une des revendications 1 à 5, dans lequel au moins l'une de ladite au moins une unité de détection (7) est conçue pour détecter passivement ledit au moins un paramètre, ou dans lequel au moins l'une de ladite au moins une unité de détection (7) est une unité de détection active.

7. Dispositif de traitement thermique (1) selon au moins l'une des revendications 1 à 6, dans lequel ledit au moins un élément de réception ou d'émission-réception (6) est relié à une unité de réception ou d'émission-réception électronique (12), dans lequel en particulier l'unité de réception ou d'émission-réception (12) est positionnée à distance dudit au moins un élément de réception ou d'émission-réception (6) sur ou à l'intérieur d'un boîtier (12) ou d'un châssis du dispositif de traitement thermique (1), sur la porte (5) ou intégrée dans une cavité de la porte (5), dans lequel, de préférence, au moins l'une d'une charnière de porte (14) de la porte (5), d'une section de contact (16) sur la porte (5) et d'une section de contact de contrepartie (16) sur un châssis du dispositif de traitement thermique (1), d'une section de connecteur sur la porte (5) et d'une section de connecteur de contrepartie sur un châssis du dispositif de traitement thermique (1), d'une ou plusieurs brides, et d'un ou plusieurs ressorts est/sont utilisé(e)s pour établir un contact entre ledit au moins un élément de réception ou d'émission-réception (6) et l'unité de réception ou d'émission-réception (12), au moins dans la seconde position de la porte (5).

8. Dispositif de traitement thermique (1) selon la revendication 7, comprenant en outre une unité de traitement de signal électronique conçue pour traiter les signaux, dans lequel en particulier l'unité de réception ou d'émission-réception (12) et l'unité de traitement de signal électronique constituent un seul composant électronique (12) ou l'unité de réception ou d'émission-réception (12) et l'unité de traitement électronique sont fournies sous forme de composants séparés.

9. Dispositif de traitement thermique (1) selon la revendication 8,
dans lequel l'unité de traitement électronique est positionnée à distance de l'unité de réception ou d'émission-réception (12), à l'intérieur d'un boîtier (13) ou sur un châssis intérieur du dispositif de traitement thermique (1), dans lequel, de préférence, au moins l'un d'une charnière de porte (14) de la porte (5), d'une section de contact (15) sur la porte (5) et d'une section de contact de contrepartie (16) sur un châssis du dispositif de traitement thermique (1), d'une section de connecteur sur la porte (5) et d'une section de connecteur de contrepartie sur un châssis du dispositif de traitement thermique (1), d'une ou plusieurs brides, et d'un ou plusieurs ressorts est/sont utilisé(e)s pour établir un contact entre l'unité de traitement électronique et l'unité de réception ou d'émission-réception (12), au moins dans la seconde position de la porte (5).

10. Dispositif de traitement thermique (1) selon la revendication 8 ou 9, comprenant en outre une unité de surveillance, de préférence intégrée dans l'unité de traitement électronique, conçue pour surveiller au moins un paramètre pendant un traitement thermique de la substance (2), dans lequel en particulier l'unité de surveillance est conçue en outre pour commander automatiquement l'évolution du traitement thermique, sur la base d'au moins l'une d'une valeur réelle dudit au moins un paramètre et d'une évolution au cours du temps dudit au moins un paramètre.

11. Dispositif de traitement thermique (1) selon au moins l'une des revendications 8 à 10, comprenant en outre un dispositif d'affichage conçu pour visualiser au moins l'un d'une valeur actuelle et d'un décours temporel d'au moins l'un dudit au moins un paramètre, dans lequel, en particulier le dispositif d'affichage est monté sur ou intégré dans une surface extérieure de la porte (5) ou sur ou intégré dans une surface extérieure d'un boîtier (13) du dispositif de traitement thermique (1).

12. Dispositif de traitement thermique (1) selon au moins l'une des revendications 7 à 11, dans lequel au moins l'un dudit au moins un élément de réception ou d'émission-réception (6), de l'unité de réception ou d'émission-réception (12), de l'unité de traitement électronique, de l'unité de surveillance et du dispositif d'affichage est positionné sur et/ou intégré dans une zone d'impression (11) de la porte (5).

13. Dispositif de traitement thermique (1) selon au moins l'une des revendications 7 à 12, dans lequel une position de montage d'au moins l'une de l'unité de réception ou d'émission-réception (12), de l'unité de traitement de signal électronique et de l'unité de surveillance est au moins l'une d'une section à double paroi de la porte (5) et d'une section à double paroi d'un châssis (17) de la porte (5), de préférence une section à double paroi d'une colonne de porte (18) ou d'un cadre supérieur de la porte (5),
dans lequel, en particulier, au moins dans une zone comprenant la position de montage, la section à double paroi est conçue pour guider un agent de refroidissement, de préférence de l'air, pour refroidir au moins l'une de l'unité de réception ou d'émission-réception (12), de l'unité de traitement de signal et de l'unité de surveillance,
dans lequel, en particulier, la section à double paroi comprend un canal de ventilation (20) séparé par des parois de canal (21, 22) de la position de montage.

14. Dispositif de traitement thermique (1) selon la revendication 13, dans lequel le dispositif de traitement thermique (1) comprend en outre un système de ventilation pour ventiler activement l'agent de refroidissement à travers la section à double paroi et/ou
dans lequel au moins dans une région comprenant la position de montage, un agent gazeux, liquide ou solide pour le refroidissement passif d'au moins l'une de l'unité de réception ou d'émission-réception (12), de l'unité de traitement de signal et de l'unité de surveillance, est enfermé.

15. Dispositif de traitement thermique (1) selon au moins l'une des revendications 1 à 14, dans lequel la substance (2) est au moins l'un d'un produit alimentaire et d'une boisson, le dispositif de traitement thermique (1) étant choisi parmi, mais non limité au groupe comprenant des fours et des cuisinières conçus pour la cuisine, la cuisson, la torréfaction, le brunissement, la cuisson au gril et les fours à micro-ondes et comprenant en outre une unité de traitement thermique conçue pour chauffer la substance (2) par l'intermédiaire d'au moins l'un d'un rayonnement thermique, d'une convection thermique, de la vapeur, des micro-ondes jusqu'aux champs électromagnétiques Pétahertz et des champs magnétiques.
